# EUROPEAN PATENT APPLICATION

(11) **EP 4 456 033 A1**
(43) Date of publication of application: **30.10.2024**
(21) Application number: 23169538.8
(22) Date of filing: 24.04.2023
(51) Int. Cl.: G08G 1/00

(54) **GATHERING AND DISTRIBUTING METADATA OF A SURROUNDING OF A VEHICLE**

(71) Applicant: Aptiv Technologies AG, 8200 Schaffhausen (CH)
(72) Inventor: ARNOLD, Michael, 40210 Düsseldorf (DE)
(74) Representative: Bardehle Pagenberg Partnerschaft mbB Patentanwälte Rechtsanwälte

(57) **Abstract**

The present disclosure relates to a computer-implemented method for gathering and distributing metadata of a surrounding of a vehicle during a ride, the method comprises the steps of, at an apparatus arranged in the vehicle, obtaining, from at least one sensor, sensor data representing at least extracts of the surrounding of the vehicle, generating, from the sensor data, metadata using at least one algorithm module, the metadata comprising at least one feature describing a characteristic of the surrounding, and transmitting the metadata to a remote server. In addition, the present disclosure further relates to a computer-implemented method for gathering and distributing metadata of a surrounding of one or more vehicles, the method comprises the steps of, at a remote server, receiving, from the one or more vehicles, metadata generated using at least one algorithm module, wherein the metadata is derived from sensor data of one or more sensors of the one or more vehicles, and storing the metadata in a storage means of the remote server. Furthermore, the present disclosure relates to a corresponding apparatus, a remote server, computer programs, a vehicle and a vehicle management system.

## Description

### Field of the invention

The present disclosure relates to methods for gathering and distributing metadata of a surrounding of a vehicle during a ride, as well as to corresponding apparatuses, to corresponding computer programs, a corresponding vehicle, a corresponding remote server and a corresponding system.

### Background

Nowadays, in almost all road traffic scenarios, for example comprising vehicles, cars, trucks, and motorbikes driving along roads, features of the environment and/or the road conditions are particularly relevant for road safety. Such features may represent the area around a vehicle or may reflect road conditions. Access to (close to) real time data concerning said features is a prerequisite for a number of scenarios, like the detection of immediate dangers arising from bad conditions of the road surface, like potholes, cracks or debris on the road.

In addition, the refresh rate concerning monitoring cycles for specific environments are of importance for scenarios like change detection, as applicable for the monitoring of the quality of the road infrastructure itself. For example, new potholes may arise, or existing ones may be repaired. Furthermore, new traffic signs may be placed along a road and old ones may be removed. Addressing these scenarios demands for a system that may detect and aggregate relevant information that may be gathered by a plurality of vehicles.

Therefore, there is a need to provide improved methods and systems for monitoring and keeping track of the conditions and changes of traffic environments.

### Summary of the invention

Aspects of the present disclosure are set out in the accompanying independent and dependent claims. Combinations of features from the dependent claims may be combined with features of the independent claims as appropriate and not merely as explicitly set out in the claims.

In an aspect, the invention concerns a computer-implemented method for gathering and distributing metadata of a surrounding of a vehicle during a ride. The method comprises, at an apparatus arranged in the vehicle, obtaining, from at least one sensor, sensor data representing at least extracts of the surrounding of the vehicle, generating, from the sensor data, metadata using at least one algorithm module, the metadata comprising at least one feature describing a characteristic of the surrounding, and transmitting the metadata to a remote server.

With the above, it is possible to track and monitor the surrounding, or extracts of the surrounding of a vehicle, for example the environment of a vehicle or the road conditions of a road on which the vehicle is presently driving by means of one or more sensors of or attached to the vehicle. The tracking and monitoring may result in one or more sensor signals from which one or more features of the surrounding may be extracted. The sensor data may for example comprise data obtained from radar or LiDAR sensors, or images obtained from one or more cameras. The extracted one or more features may then be stored in terms of metadata, describing one or more characteristics of the tracked surrounding, like the type and position of traffic signs, etc. The metadata may then be communicated to a remote server which may allow a further processing or sharing of the extracted features with other road users or other entities. The tracking and monitoring may be repeatedly performed, e.g., if a vehicle comes along a road segment that has previously been tracked and monitored. This allows updating the features by communicating the newly tracked and monitored features to the remote server, which may allow to track changes in the surrounding over time, like changes in the road conditions that might arise from repaired potholes, newly placed traffic signs, etc.

In yet a further aspect, the method further comprises receiving, from the remote server, the at least one algorithm module, and/or configuring, the at least one algorithm module dependent on at least one characteristic of the vehicle.

By receiving one or more algorithm modules from the remote server, it is possible to update existing algorithm modules that, for example, are stored in an in-vehicle unit, in a mobile device or in a similar electronic device arranged in the vehicle. In addition, it is possible to inject new algorithm modules into the aforementioned devices or units, which may be tailored to specific tracking and monitoring situations. Hence, the devices or units may be adapted to specific tracking and sensing situations. The configuration of the at least one algorithm may be either conducted by the remote server or may be done at the vehicle. The configuration may dependent on one or more characteristics of the vehicle, which may allow to adapt the operation and/or function of the at least one algorithm module to specific needs and thus may improve flexibility and adaptability. Furthermore, tracking quality may be improved. In this respect, taking into account the wind shield wiper configuration allows to adapt the used sensor (e.g., a camera) such that obtaining the sensor data is not disrupted by the wind shield wipers. Moreover, adapting the sensor to the speed at which the vehicle presently drives may allow to adapt the obtaining accordingly. The same applies to the brightness of the surrounding, wherein the sensor sensitivity may be adjusted accordingly such that the sensor is able to operate appropriate independent of the conditions of the vehicle configuration or of conditions of the surrounding of the vehicle.

In a further aspect, configuring comprises adapting one or more of the at least one algorithm module: a detection threshold, an interaction configuration of two or more submodules of the at least one algorithm module, an update rate and/or a frequency of computation, an output target of the at least one algorithm module.

Adapting the behavior and/or configuration as mentioned above may improve flexibility and/or adaptability of the at least one algorithm module. Adjusting the detection threshold may be used to control the sensitivity of the detection process carried out by the at least one algorithm module. Configuring the interaction may allow to integrate submodules as needed, depending on the specific detection needs according to specific surroundings or traffic situations. Lowering or increasing the update rate or the frequency of computation may allow to control the energy consumption of the apparatus executing the algorithm of the at least one algorithm module. Adjusting the output target allows selecting either a local storage or a remote storage, e.g., located on the remote server, to store the tracked data.

In a further aspect, the step of generating meta data further comprises determining, whether the metadata include a personal identification mark, and removing from the metadata the personal identification mark, if it has been determined that the metadata include a personal identification mark. By removing the aforementioned personal identification mark (e.g., a section of a photo showing the face of a car driver of a traffic participant), privacy of the driver, the passengers and/or other traffic participants may be improved as the resulting metadata does not include any hints regarding the vehicle or the identity of the person that has generated the corresponding metadata. Hence, privacy of traffic participants may be maintained. The latter may for example be achieved by blurring corresponding sections of captured images. In case of metadata that does not only rely on image data, for example, detected positions, actions and attentions of pedestrians could be included, however, without features that would allow an identification of the corresponding individuum.

In yet a further aspect, the method further comprises the step of determining the location of the vehicle and/or of the at least one feature describing a characteristic of the surrounding and transmitting the metadata if it has been determined that the location of the vehicle and/or of the at least one feature is outside of one or more predefined areas.

This may prevent that one can draw conclusions regarding a driver's home, working place or other locations that may be frequently visited by a driver (or the owner of a car) and may thus improve privacy. These areas/locations/places may then be predefined and the transmission of the metadata may only be conducted if the location of the vehicle and/or of the at least one feature describing a characteristic of the surrounding is outside of the predetermined area(s).

In a further aspect, the one or more sensors comprises one or more of a vision-based sensor, a radar sensor, and/or a LiDAR sensor.

Using one or more of the above sensor types allows tracking and monitoring the surrounding under different conditions. A vision-based sensor may be one of a color-based camera, an infrared (IR) camera and/or a hybrid color-based and IR camera. For example, in IR camera may provide an improved tracking and monitoring during night, whereas a color-based camera may provide improved images during daytime. Using more than one sensor may allow to aggregate the sensor signals from the sensors, which may produce improved tracking and monitoring results.

In a further aspect, the method further comprises at least one of receiving, from the remote server, guidance information indicating a preferred route for the vehicle, and indicating the online status of the vehicle to the remoter server.

Providing guidance information to a vehicle may improve tracking and monitoring coverage. For example, if a specific road that is not heavily trafficked, the remote server may instruct or ask a vehicle to take this specific road so that features of the corresponding surrounding may be detected, transferred into metadata and afterwards communicated to the remote server. In addition, when the online status of a vehicle is made available to the remote server, the remote server may be better control coverage as he is aware of the number of vehicles presently available for monitoring of the surrounding. The vehicle may be part of a vehicle fleet that may comprise a plurality of vehicles. The vehicles of such a fleet may be of different type, like a car or a motor bike etc.

In an aspect, the invention relates to a computer-implemented method for gathering and distributing metadata of a surrounding of one or more vehicles. The method comprises at a remote server, receiving, from the one or more vehicles, metadata generated using at least one algorithm module, wherein the metadata is derived from sensor data of one or more sensors of the one or more vehicles, and storing the metadata in a storage means of the remote server.

Operating a remote server as outlined above may allow to gather a large number of metadata reflecting features of the surrounding of one or more vehicles. The vehicles may be part of a vehicle fleet. Hence, the memory/storage of the remote server may comprise metadata that reflects the environment and road conditions of a large area, e.g., of a city or of a state. Hence, the remote server may provide a scalable platform that allows gathering metadata from one or more vehicles and storing the corresponding metadata so that it could be accessed by other vehicles or by third-party vendors for further processing. The storage means of the remote server may comprise one or more hard discs, flash memory, random access memory or the like.

In a further aspect, the method comprises determining one or more operation state parameters associated with the one or more vehicles, and configuring the at least one algorithm module according to the one or more operation state parameters.

Determining the one or more operation state parameters may for example be passed on one or more values and/or parameters received from the one or more vehicles, e.g. by means of wireless communication. The values and/or parameters may comprise one or more of a geographical position of the one or more vehicles, a weather condition of the surrounding of the one or more vehicles, a time and/or date, a current collection coverage of the one or more vehicles, and/or historic metadata received form the one or more vehicles. Based on the one or more operation state parameters, the remote server may apply a configuration to the at least one algorithm module such that the at least one algorithm module is adapted to the conditions of the vehicles and/or to a condition of its surrounding. As an example, during bad weather (e.g., if it is raining or snowing), an image or pattern recognition module of the at least one or more algorithm module may be configured such that an image analysis still provides adequate results, despite bad image quality due to the bad weather conditions. The configuration may further comprise detection thresholds, an indication of how submodules of the at least one algorithm module interact, an update rate or frequency of computation.

In yet a further aspect, the method comprises determining one or more algorithm transmission parameters, selecting one or more algorithm modules available to the remote server, and transmitting the selected one or more algorithm modules to the one or more vehicles.

The one or more algorithm transmission parameters may be determined based on one or more of a geographical position of the one or more vehicles, a type of the one or more vehicles, an identification of the hardware processing equipment available in the one or more vehicles etc., which may be (preferably wirelessly) communicated to the remote server. This allows the remote server to select one or algorithm modules appropriate for being executed in the hardware processing platform of the one or more vehicles. In addition, it may be possible to select updated versions of algorithm modules. Afterwards, i.e., after the selection, the one or more selected algorithm modules may be transmitted to the one or more vehicles, e.g. for updated purpose. Furthermore, it may be possible to inject new or additional algorithm modules into the one or more vehicles.

A further aspect of the invention relates to an apparatus comprising means configured for performing the method executed at an apparatus in a vehicle, as outlined above.

The apparatus preferably comprises a smartphone and/or an ADAS. Both may be connected to an in-vehicle entertainment system.

Yet a further aspect of the invention relates to a computer program comprising instructions, which when executed by a processing system, causing the processing system to perform the method executed at an apparatus in a vehicle or at a remote server, as outlined above.

A further aspect of the invention relates to a vehicle comprising means configured for performing the method executed at an apparatus in a vehicle, as outlined above.

The vehicle maybe one of a car, a truck, or a motorbike. however, the vehicle is not limited to the aforementioned examples.

A further aspect of the invention relates to a remote server comprising means for performing the method executed at a remote server, as outlined above.

Yet a further aspect of the invention relates to a vehicle management system comprising one or more vehicles as outlined above and at least one remote server as outlined above.

### Brief description of the drawings

Various aspects of the present invention are described in more detail in the following by reference to the accompanying figures without the present invention being limited to the embodiments of these figures.
- Fig. 1: depicts a traffic scenery from which features can be detected according to aspects of the present invention.
- Fig. 2: depicts a device according to aspects of the present invention.
- Fig. 3: depicts an in-vehicle unit according to aspects of the present invention.
- Fig. 4: depicts the structure of metadata according to aspects of the present invention.
- Fig. 5: depicts a plurality of vehicles and a remote server according to aspects of the present invention.

### Detailed description

In the following, aspects of the present invention are described in more detail.

### Road scenery

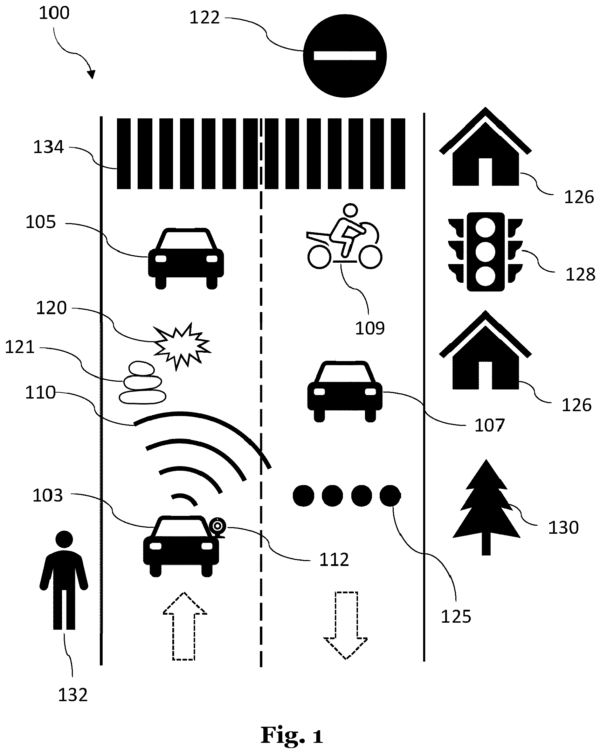

Fig. 1 depicts a road scenery 100 including a plurality of vehicles, like cars 103, 105 and 107, and motorbike 109. The shown road comprises two lanes directed into opposite directions, as indicated by the dashed arrows. The left lane of the shown road may comprise a pothole 120 and debris 121, whereas the right side comprises speed bumps 125. In addition, the road scenery 100 comprises a traffic sign 122 and a traffic light 128. In the surroundings of the road scenery 100, houses 126 are arranged, as well as a tree 130. On the left side of the road, a pedestrian 132 is depicted. On the upper side of the depicted road, zebra crossings 134 are shown.

Car 103 comprises a camera 112, which may be used to track and monitor the surrounding of the car 103, including the road surface and the environment around the road. In addition, car 103 may comprise one or more other sensors (not shown) that may be used to track and monitor the surrounding of the car 103. The signal of these sensors is indicated by the waves 110. All the aforementioned objects, like the cars 105, 107, the houses 126, the traffic light 128, the zebra crossing 134, the pedestrian 132 and so forth may be recognized by the sensors and/or the camera. The corresponding sensor signals and/or camera images may be forwarded to a processing unit that may be located in an in-vehicle unit, like an ADAS, or located in a mobile device that may for example be arranged at the windshield inside the car 103. Both the smartphone and the in-vehicle unit may be connected to an entertainment system of the vehicle.

The processing unit may transform the gathered sensor signals into metadata comprising features describing the surrounding of the vehicle. The metadata may then be communicated by means of a wireless communication interface to a remote server for storing and sharing the metadata with other road users or third-party vendors.

### Smartphone

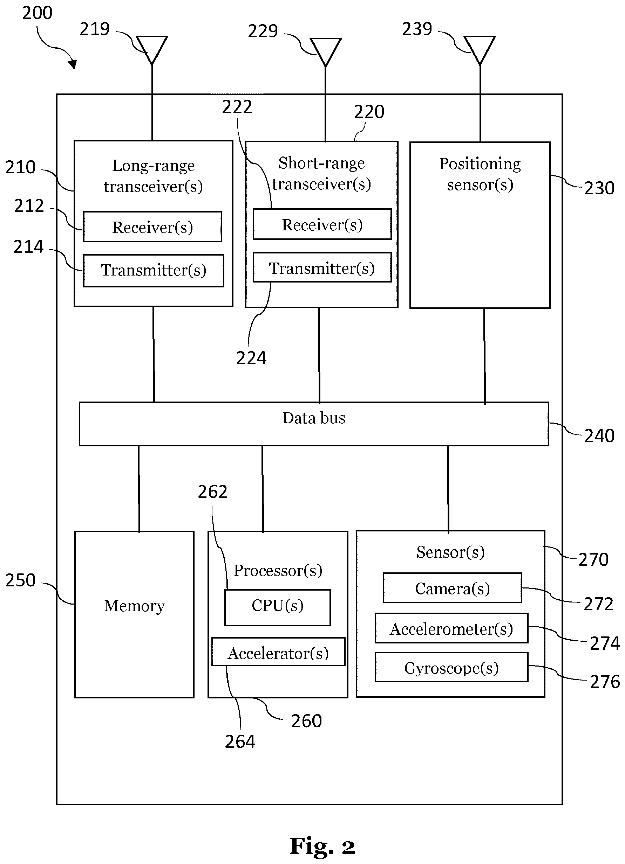

Fig. 2 depicts a device 200 (e.g., a mobile device, a smartphone or a custom recording device) that may be used for tracking and monitoring the surrounding of a vehicle. Device 200 may comprise one or more long-range transceivers 210, preferably comprising one or more receivers 212 and one or more transmitters 214. The one or more long-range transceivers 210 may be coupled to an antenna 219. In addition, device 200 may comprise one or more short-range transceivers 220, preferably comprising one or more receivers 222 and one or more transmitters 224. The one or more short-range transceivers 220 may be coupled to an antenna 229. Furthermore, device 200 may comprise one or more positioning sensors 230, coupled to an antenna 239, to determine the position of a vehicle based on a global navigation satellite system (GNSS). Examples for positioning sensors are GPS, GLONASS, or GALILEO etc. Device 200 may further comprise a memory 250, for example a flash memory or any other suitable storage means. In addition, device 200 may comprise one or more processors 260, preferably comprising one or more common CPUs 262 and one or more accelerators 264. An accelerator 264 may be a specific processor adapted to efficiently execute trained machine learning models and corresponding algorithms suitable for object detection and/or classification. Device 200 may further comprise one or more sensors 270, preferably comprising one or more cameras 272, one or more accelerometers 274 and/or one or more gyroscopes 276. The aforementioned components of device 200 may be connected by means of a data bus 240.

Device 200 may for example be positioned behind the windshield of the vehicle so that a camera 272 of the device 200 can film or capture the surrounding of the vehicle. Alternatively or in addition, the one or more accelerometers 274 and/or the one or more gyroscopes 276 may be used for tracking and monitoring the environment of the vehicle. While the cameras 272 may be particularly well suited for tracking and monitoring larger objects, like cars 105 and 107, the one or more accelerometers 274 and the one or more gyroscopes 276 may be Particularly well-suited to detect speed bumps 125 or cracks in a road surface. In addition, device 200 may receive sensor information from sensors mounted to the vehicle. This could be achieved by connecting device 200 by means of one or more of its short-range transceivers 222 (e.g., Bluetooth-based) to an entertainment system or an ADAS of the vehicle. The captured images as well as the other sensor data may then be passed to the one or more processors 260. The one or more processors 260 may for example execute a machine learning model that has been trained to detect and classify specific features of the captured surrounding of the vehicle, for example cracks and potholes 120 in the road surface, houses 126 along the road, traffic signs 122, traffic lights 128, etc.

After having detected and/or classified one or more features, the one or more features may be stored in terms of metadata within the memory 250 of the device 200. Optionally, the metadata may be associated with data gathered from the one or more positioning sensors 230 so that it is clear from the metadata to which geographical location the one or more features of the metadata belong, i.e., where they are geographically located.

### In-vehicle unit

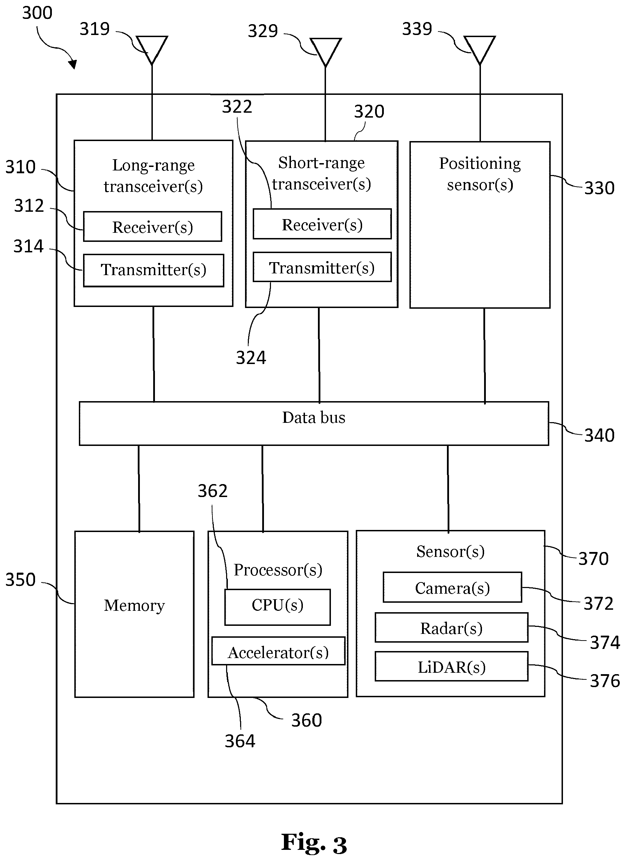

Fig. 3 depicts an in-vehicle unit 300 that may be used for tracking and monitoring the surrounding of a vehicle. In-vehicle unit 300 may comprise one or more long-range transceivers 310, preferably comprising one or more receivers 312 and one or more transmitters 314. The one or more long-range transceivers 210 may be coupled to an antenna 319. In addition, in-vehicle unit 300 may comprise one or more short-range transceivers 320, preferably comprising one or more receivers 322 and one or more transmitters 324. The one or more short-range transceivers 320 may be coupled to an antenna 329. Furthermore, in-vehicle unit 300 may comprise one or more positioning sensors 330, coupled to an antenna 339, to determine the position of a vehicle based on a GNSS. Examples for positioning sensors are GPS, GLONASS, or GALILEO, etc. In-vehicle unit 300 further comprises a memory 350, for example a flash memory, a hard disc or any other suitable storage means. In addition, in-vehicle unit 300 may comprise one or more processors 360, preferably comprising one or more common CPUs 362 and one or more accelerators 364. An accelerator 364 may be a specific processor adapted to efficiently execute trained machine learning models and corresponding algorithms suitable for object detection and/or classification. In-vehicle unit 300 may further comprise one or more sensors 370, preferably comprising one or more cameras 372, one or more radars 374 and/or one or more LiDAR sensors 376. The aforementioned components of in-vehicle unit 300 may be connected by means of a data bus 340.

In-vehicle unit 300 may for example be arranged in an entertainment or ADAS of a vehicle. The one or more cameras 372, e.g., an IR camera, a color-based camera or a combination thereof, the one or more radars 374 and the one or more LiDAR sensors 376 may be used for tracking and monitoring the surrounding of the vehicle. All the aforementioned sensor types are well suited for tracking and monitoring the surrounding of a vehicle. In addition, in-vehicle unit 300 may receive sensor information from a device 200 mounted to the vehicle. This could be achieved by connecting to the device 200 by means of one of the short-range transceivers 322 (e.g., Bluetooth-based). The captured images as well as the other sensor data may then be passed to the one or more processors 360. The one or more processors 360 may for example execute a machine learning model that has been trained to detect and/or classify specific features of the captured surrounding of the vehicle, for example cracks and potholes 120 in the road surface, houses 126 along the road, traffic signs 122, traffic lights 128, etc.

After having detected and/or classified the one or more features, the one or more features may be stored in terms of metadata within the memory 350 of the in-vehicle unit 300. Optionally, the metadata may be associated with data gathered from the one or more positioning sensors 330 so that it is clear from the metadata to which geographical location the one or more features of the metadata belong.

Now referring to both Figs. 2 and 3, memory 250, 350 may further comprise a service application. The service application may provide a graphical user interface (GUI) and a backend. The backend of the service application may provide one or more interfaces for executing one or more algorithm modules, e.g., one after another or in parallel. The algorithm modules may comprise the above-mentioned trained machine learning models and corresponding algorithms, which may be adapted for detecting and classifying objects within the sensor data received from one or more of the sensors 270, 370. In case of a required update, memory 250, 350 of device 200 or of in-vehicle unit 300 may receive an updated version of one or more algorithm modules and replace the outdated version(s) with the newly received version(s). In addition, it is also possible that one or more new algorithm modules are received that have not previously been installed on the devices 200, 300. Reception of the updated or new versions of the one or more algorithm modules may be performed by the long-range transceivers 210, 310, which may, for example, provide access to a 4G or 5G wireless communication system.

In addition, both the device 200 and the in-vehicle unit 300 may display the GUI of the service application on a display (not shown). The GUI may a user allow to interact with the service application, for example by means of a touchscreen. For example, a user may scroll through the already gathered metadata and/or through metadata that has been received from a remote server and being generated by other users.

### Metadata

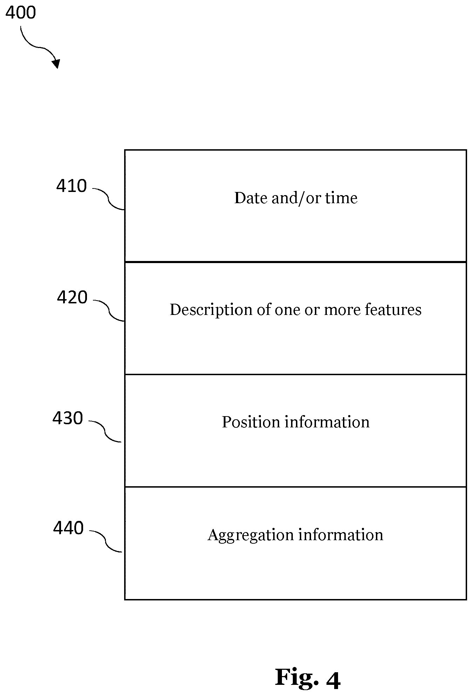

Fig. 4 depicts an example structure of a metadata 400 according to aspects of the present invention. Metadata 400 may comprise a date and/or time information field 410, a field 420 comprising a description of one or more features, a position information field 430, and an aggregation information field 440.

Field 410 may comprise information reflecting the date and/or time when the description of the one or more features stored in field 420 was generated. The date and/or time may also reflect the point in time when the one or more features were extracted from the sensor data. Recording the date and/or the time may allow a remote server, on which the metadata may be later-on stored, to track changes of specific features over time. Hence, it may for example be detected when the size of a pothole increases or when a pothole has been repaired (and thus no longer exists). Furthermore, it may be detected when one or more new traffics signs 122 have been placed to a location where previously no traffic sign 122 was located. Field 410 is optional and does not have to be included in the metadata 400.

Field 420 may comprise a description of one or more features derived from the sensor data as outlined above. The description of the one or more features may for example characterize the object(s) to which the one or more features belong. The description may for example indicate that the corresponding object is a traffic light 128, a traffic sign 122 or a pothole 120. In general, the description may comprise anything that could be derived from sensor data and/or image data, like further localization information (e.g., determined based on radar data to define a position of an object relative to a vehicle carrying the radar), HD maps etc.

The position information field 430 may indicate the geographical position of the objects described by the one or more features of field 420. The geographical position may for example be obtained by positioning sensors 230, 330. Field 430 is optional and does not have to be included in the metadata 400.

Field 440 may provide aggregation information, which may for example indicate to a remote server how a plurality of sets of metadata 400 have to be combined or connected.

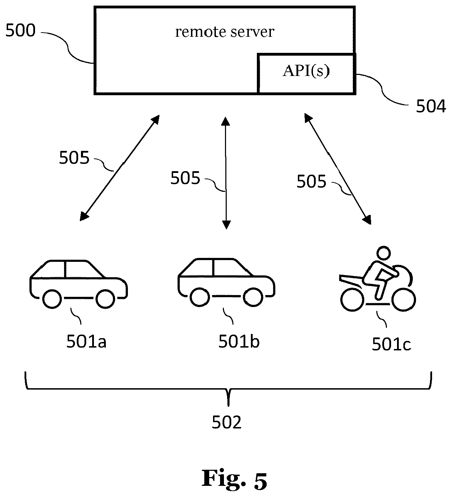

Fig. 5 depicts a plurality of vehicles 502, comprising the vehicles 501a-c, and a remote server 500, which comprises one or more APIs 504. Each vehicle 501a-c of the plurality of vehicles 502 may be connected to the remote server 500 by means of the wireless communication links 505. The wireless communication links 505 may operate according to a 4G or 5G wireless communication system. Vehicles 501a-c may for example comprise the devices 200 and/or the in-vehicle unit 300. By means of the devices 200, 300, the vehicles 501a-c of the plurality of vehicles 502 may be able to track and monitor their surroundings by means of the one or more sensors 270, 370. By means of the service application, running on the devices 200, 300, one or more features may be extracted from the data provided by the aforementioned sensors, which may then be stored as metadata 400. The metadata 400 may then be communicated by means of the long-range transceivers 210, 310 to the remote server 500. To receive the metadata 400, the remote server 500 may use one or more of the APIs 504.

In addition, the remote server 500 may use one or more of the APIs 504 to share metadata 400 among the vehicles 500a-c of the plurality of vehicles 502. For example, vehicle 501a has transmitted metadata 400 to remote server 500, remote server 500 may communicate the received metadata 400 to the other vehicles 501b and 501c of the plurality of vehicles 502. If, for example, vehicle 501a detects a new pothole 120 in the surface of a road, it may generate a description of the feature indicating a pothole 120, may assign a timestamp to indicate the time of detection as well as a position information indicating the geographical location of the detected pothole 120. The description, the timestamp and the position information may then be stored as metadata, preferably having a structure as depicted in Fig. 4. Then, the metadata 400 relating to the pothole 120 may be communicated to the remote server 500. Remote server 500 may then provide the metadata 400 relating to the pothole 120 to the vehicles 501b and 501c, using the wireless communication links 505. Hence, both vehicles 501a and 501b are then aware of the pothole 120, although they have never passed and tracked it on their own. Based on the information regarding pothole 120, an ADAS of vehicles 501b-c may react much earlier because it is already aware of pothole 120, even if it is not in its sensor range. Therefore, for example, an emergency brake command or a steering command may be initiated much earlier, which might avoid an accident that otherwise could have happened.

Besides sharing metadata 400 among a plurality of vehicles 502, remote server 500 may use one or more of its APIs 504 to provide the metadata 400 to third-party vendors for further processing. Similarly, remote server 500 may receive one or more updated or new algorithm modules, for example including trained machine learning models for object detection and/or classification, from third-party vendors. The new or updated algorithm modules may be injected into the vehicles 501a-c of the plurality of vehicles 502 to improve their tracking and monitoring capabilities. More specifically, the modules are preferably injected into a device 200 and/or into an in-vehicle unit 300, both arranged in the vehicles. That is, the third-party vendor uploads a new or updated algorithm module to remote server 500 by means of its one or more APIs 504, which could be done by a wireless connection or by a wired connection. Then, remote server 500 distributes the new or updated algorithm module to one or more of the vehicles 501a-c of the plurality of vehicles 502 by using the wireless communication links 505.

### Connection scheme

In the following, it is further described how the individual entities, comprising but not limited to a device 200, an in-vehicle unit 300 and a remote server 500, can be connected to each other.

A device 200 may be positioned at the windshield (and potentially at other suitable locations) of a vehicle (e.g., a car or a truck), allowing the device 200 to record by means of its camera, the environment of the vehicle and to detect features of the surrounding of the vehicle, like road conditions, objects etc. Instead of device 200, an in-vehicle unit 300, attached to an in-vehicle camera, may be used. It is also possible to use a stand-alone camera and connect it to either device 200 or to in-vehicle unit 300, e.g., by means of the short-range transceivers 220, 320. Despite cameras, all other sensors 270, 370 may be used to track and monitor the surrounding of the vehicle.

Independent of the used device (e.g., device 200, in-vehicle unit 300 or standalone camera), aspects of the present invention rely on the following components: a camera or a camera sensor, one or more processing units (including one or more accelerators, a memory, comprising RAM and data storage, data transmission mechanisms, a service application, a wireless communication connection, a remote server 500, a device energy supply, and other sensors.

Depending on the used device, the following examples show how the individual components may be connected and interact with each other. A camera or camera sensor may be integrated in a standalone camera mounted at the windshield of a vehicle. One or more processing units process the sensor data obtained from the camera or camera sensor. The standalone camera may also comprise a data storage and RAM to support the data processing as well as data processing in general. By processing the data, metadata 400 may be generated from the images obtained from the camera or camera sensor. The standalone camera may connect to a driver's device 200, e.g., using Bluetooth based on its one or more short-range transceivers 220, and more specifically to a service application installed on device 200. The service application may obtain metadata from the standalone camera or may receive the (possibly pre-processed) sensor data and generates corresponding metadata on its own. By means of the service application, device 200 may communicate the metadata 400 to a remote server 500. It may also receive metadata, gathered by other vehicles, from remote server 500. the necessary power supply for the standalone camera and/or for device 200 may be provided from a built-in battery or by a cable-bound power supply, retrieving the power directly from the vehicle.

Instead of a standalone camera, a device 200 may be used and installed behind the windshield of a vehicle. Then, the camera of device 200 may be used for recording images of the surrounding of the vehicle. Then, the service application may be used as described above with respect to the standalone camera, making a communication interface between a standalone camera and the device 200 obsolete. The device 200 may receive its power either from a built-in battery or directly from the vehicle by means of a cable-bound power supply.

Instead of a standalone camera or a device 200, an in-vehicle unit 300 may be used. The in-vehicle unit 300 may be connected to one or more cameras 372 installed inside or outside the vehicle. in addition, the in-vehicle unit 300 may be connected to one or more other sensors 370, like one or more radars 374 or one or more LiDAR sensors 376. The in-vehicle unit 300 may be an ADAS or may be connected to such a system. The in-vehicle unit 300 may further be a car entertainment system or connected to such a system. By means of its one or more processors 360, the in-vehicle unit 300 may perform the data processing as described above with respect to the standalone camera and with respect to device 200. It may also include, for example in its memory 350, the service application, for processing the data received from the one or more sensors 370, for communicating metadata 400 to a remote server 500 and/or for retrieving metadata 400 from the remote server 500. Power may be retrieved by a cable-bound power supply of the vehicle.

Like any local or remote command to the system, authentication and encrypted communication channels can be used to serve as gate keeper for unauthorized access. The in-vehicle unit 300 may by default work with encrypted storage. In addition, algorithm modules could receive certification by independent entities.

### Data processing and algorithms

In the following, it is further described how the one or more algorithm modules may operate, for example in a device 200, in an in-vehicle unit 300 or in any other suitable device.

First of all, it has to be mentioned that one or more algorithms or algorithm modules can run at the same time, i.e., in parallel. The data to be processed by the one or more algorithms or algorithm modules may come from a camera or a camera sensor as mentioned above or from any other sensor sources, like the sensor types mentioned above. The service application may determine on its own which of the one or more algorithms or algorithm modules are to be executed. This may for example depend on the kind of features to be detected. For example, one algorithm or algorithm module may be well suited for detecting bad conditions of road surfaces, whereas another algorithm or algorithm module may be better suited for detecting large objects in the surrounding of a vehicle. In addition or alternatively, the service application may receive instructions from remote server 500 providing information which of the one or more algorithm or algorithm modules are to be used.

The processing rate and/or update rate of an algorithm or of an algorithm module may be adjusted by the service application. The processing rate may for example be decreased to save battery power. However, if a comprehensive tracking and monitoring of the surrounding is required, the processing rate may be increased. To improve the operation of the one or more algorithms or algorithm modules, one or more accelerators 264, 364 may be used. The accelerators 264, 364 may be specific processors adapted to efficiently execute, for example, trained machine learning models and/or other artificial intelligence engines that may be included in the algorithms or algorithm modules.

One task of an algorithm or algorithm module is to process the sensor data and to derive features from it. Hence an algorithm or algorithm module may implement an object detection and/or classification process based, for example, on a trained neural network. For example, the object detection and/or classification may comprise a pedestrian detector operating on a convolutional neural network. However, also other types of detectors/classifiers may be used, e.g., for detecting and/or classifying vehicles or other kinds of objects.

The derived features may be stored in terms of a description in metadata 400. The metadata 400 may be enriched by a position information field 430 indicating the geographical location of the one or more features represented by the description 420. In addition, the metadata 400 may be enriched with a date and/or time information field 410 indicating the time when the description of the one or more features was generated, when the one or more features were extracted, or when the corresponding one or more objects represented by the one or more features were detected by the camera and/or the other sensors. Furthermore, the metadata 400 may be enriched with an aggregation information field 440, for example indicating how different sets of metadata 400 belong together.

The algorithm modules are further configurable, e.g., with respect to their detection threshold. The algorithm modules may contain multiple submodules that can be activated or deactivated. Furthermore, the update rate and/or frequency of computation (i.e., one per three seconds) may be adjustable. The results produced by an algorithm module may serve as input or output of other algorithms, running on the recording platform (apparatus as outlined above), effectively implementing more sophisticated data processing pipelines on the recording platform. Inputs and outputs of the algorithm modules may be delivered via their configuration. Therefore, an output might be either another algorithm module, local storage, the remote server or any other feasible target device or location. Therefore, for example, a path planning component might deliver route suggestions to a driver via a board computer.

Optionally one can deploy an algorithm module with a fixed configuration. This may allow a local environment dependent configuration of local recording platforms, based on specific signals (e.g., wind shield wipers configuration, vehicle speed, etc.).

In this case, the recording device would connect to the corresponding data feeds. Furthermore, an over the air configuration from a vehicle management system and/or a remote server is possible. However, also a configuration by the driver over a service application (see below) is possible.

### Service application

In the following, it is further described how the service application may operate. The service application may support encrypted communication between itself and the remote server 500. for example, metadata 400 may be encrypted and then communicated to a remote server 500. It is also possible that remote server 500 encrypts metadata 400 received from other vehicles and then communicates said metadata 400 to another vehicle. The one or more algorithms or algorithm modules may be stored in an encrypted manner inside the service application, preventing unauthorized access to them by malicious third parties.

The service application may further be adapted to anonymize the metadata 400. Anonymized metadata does not allow to find out who the driver was who recorded the corresponding sensor data. Furthermore, anonymized metadata does not comprise any information of the driver itself or of its passengers. Furthermore, in case that other traffic participants, like pedestrians, have been recorded (for example by a camera), the image data is also anonymized such that one cannot recognize any persons on the image data. It is also possible, that the metadata 400 does not comprise any information concerning the geographical location of its corresponding one or more features.

As a further example, the one or more algorithms or algorithm modules may run on raw sensor data (e.g., in image data) configured to not produce output relevant to data privacy regulations (e.g., it is not possible to draw conclusion regarding position, actions and attention of pedestrians etc.). In such a configuration, the one or more algorithms or algorithm modules may run without data protection augmentation. For example, the un-augmented data would not leave the device/application and would be immediately deleted after it is not needed anymore.

Furthermore, metadata 400 may not be collected and/or transmitted when the vehicle is located at or close to a predefined location, for example near to the driver's home or working place. In an example implementation, metadata 400 is generated and collected from the beginning up to the end of a ride. Then, before transmitting the metadata 400 to a remote server 500 the metadata 400 belonging to the beginning and the end of the ride is removed, which may allow obscuring the home or the working place of the driver. In addition or alternatively, one or more geographical zones can be predefined. Then, before transmitting the metadata 400 to a remote server 500, the metadata 400 belonging to the one or more predefined zones is removed.

To motivate a driver to use the system as described above, a reward mechanism may be integrated into the service application providing incentives to the driver for using the system. This may, for example, comprise monetary compensation, promotions, gamification, citizen science engagements etc. The more metadata 400 is uploaded by a driver the more reward points he may earn that may later be used in a shop that may also be included in the service application.

To provide for an improved road coverage, the remote server 500 may communicate instructions to the service applications, indicating to the driver which routes to take. This may allow the remote server 500 to control which areas, for example, of a city are preferably to be tracked and monitored. If a driver follows these instructions, he may earn extra reward points.

In addition, the service application may provide in its GUI buttons or switches to activate or deactivate the recording of camera and/or sensor data as well as the transmission of metadata 400.

### Server-side data processing

In the following, the server-side data processing is further explained by means of examples.

The remote server 500 may provide updates for the service application, including software updates of the application itself as well as of the algorithm modules executed in or by the service application. Furthermore, the remote server 500 may decide which algorithm modules are to be copied and executed by which device type. For example, based on a model identification number of a device 200, remote server 500 may conclude that this device 200 does not provide sufficient processing power for executing a specific trained machine learning model. Hence, it may provide this device 200 with, for example, a specific version of the trained machine learning model that requires less computational power, maybe with the drawback of less accurate detection and/or classification results. Besides the identification number of a device 200, this decision could also be based on previous recording behavior, when for example a device reported back to the remote server 500 that is not able to extract features from sensor data in an adequate time. In addition, dropouts in the metadata 400 may indicate to the remote server 500 that the corresponding device does not provide sufficient processing power to execute a specific algorithm module.

Furthermore, remote server 500 may define in which areas recording is to be performed. Hence, remote server 500 may define specific regions for recording and may exclude other regions from recording. Depending on the region, the remote server 500 may also decide which algorithm module shall be used to process the data. This allows an application of the algorithm modules depending on the specific need implied by a region to be tracked and monitored.

With respect to privacy, remote server 500 may store all the received metadata 400 in an encrypted manner. Remote server 500 may also be responsible for rewarding drivers with reward points, for example depending on the amount of provided metadata for 100. The remote server 500 may also provide the shop in which a driver or user may spend its earned reward points. The remote server 500 may further be adapted to aggregate the collected metadata 400, for example based on the aggregation information field 440, to produce specific data products, which may be for example later on sold to third-party vendors for further usage or processing. Remote server 500 may offer the data products or the collected metadata 400 to third-party vendors by means of one of its APIs 504.

According to a further aspect, the remote server 500 may provide licensable APIs, which may be one of the APIs 504. This may allow customers and/or third-party vendors to deploy their own custom algorithm modules on a plurality of vehicles 502 in specific regions. Nevertheless, metadata collection must always abide data privacy regulations, limiting the types of models that are allowed to be deployed by remote server 500. This may either be checked by an operator of the remote server 500 or by an artificial intelligence engine, which may for example analyze the code of the algorithm modules to be deployed to the vehicles 501a-c of the plurality of vehicles 502.

The remote server 500 may represent a data warehouse and backend solution, which provides interfaces, between itself and customers. Any services related to the plurality of vehicles 502 available for recording/monitoring, datasets or data products might be offered via a licensable API or similar means of distribution. This API with potential frontend implementation might also offer insights into certain recording projects, coverage, vehicles and more. The API and frontend might also offer dashboards, billing options, statistics and other services. In the case of licensing or renting access to a subset of the plurality of vehicles available for recording/monitoring, there might also be vehicle management related interfaces, that would allow the deployment of certified algorithms as well as their configuration. A customer could potentially implement and deploy their own vehicle management logic for optimization or recording project management.

When the in-vehicle unit 300 is activated, a signal is sent to the remote server 500 in periodic intervals to indicate its online status. Not receiving a signal from a vehicle for a certain time would change the availability status of a vehicle to offline. The remote server 500 may further validate all deployed algorithm modules and their versions via checksums. The remote server 500 may further request the GPS location from the vehicle, for the purpose of algorithm selection. Note that this location may not collected for aggregation purposes, but only for system update purposes. This way, home or work location data can still be prevented from aggregation, while updates can occur as soon as the system was activated. There is the option, that the users of the system (drivers) can select via an API (board computer), which algorithm modules to run. There is further the option that the API could even visualize collected data and their statistics. The remote server may further determine based on all available algorithm modules, metadata, vehicle information, already collected data, customer requests or contracts and the like, which set of algorithm modules to deploy, update or keep on specific vehicles. The remote server may in addition initiate updates to the recording platform. This covers general software updates, setup/update of algorithm modules, algorithm module specific (re-)configuration, and recording software (re-)configuration.

Data sent from the vehicles may be collected in the data warehouse solution, into algorithm/module dependent data collections. The collected data may also contain references to the configuration data from the algorithm modules as well as the recording system in general. Independent data processing pipelines can ingest the recorded data from any algorithm or module for further aggregation. That means, that recorded data from multiple independent recording vehicles might be integrated/aggregated into a shared world view or target dataset or data product. Access to the raw data, derived aggregated datasets or data products can be offered or licensed by third parties via API endpoints to the data warehouse.

### Vehicle management aspects

Data processing pipelines and microservices may crawl the individual data collections of the data warehouse in order to map out data coverage and other data collection related metrics. Based on data collection related metrics, a vehicle management service will determine which algorithm modules should be deployed with which configuration on which vehicle, considering all available metadata (i.e., weather, time of day, etc.), current collection coverage or data derived from historic data.

A potential implementation for an automated vehicle management service might be, but would not be limited to a reinforcement learning agent, trying to optimize a data collection target related fitness function. Instead of automated vehicle management via an intelligent agent, the system might be manually configured on a per vehicle basis, per region basis or based on similar attributes via specific assignment functions.

In order for an automated or scripted vehicle management system to actually deploy any assignment of algorithms, updates or configurations, a designated vehicle API can receive requests for atomic vehicle operations (i.e. send new algorithm A to vehicle B, remove algorithm module C from vehicle D, get device metrics data from vehicle E, send new configuration F for algorithm G to vehicle H, update target vehicle software I, etc.).

Every algorithm module might run its own path planning agent, that would provide region of interest data to all recording vehicles running the corresponding algorithm. This could be provided in the form of map data with coverage information, that would allow to run path planning on the recording device as a service, with GPS data as input and route proposals as output to the board computer.

### Use cases and technical advantages

The mining of the features of the surrounding of vehicles on a large scale may allow for, but not being limited to, the monitoring of the overall road conditions (for example of a city or a state), like potholes, street sign visibility, debris on the road surface, road construction sides, weather conditions, accidents, unexpected changes to the environment, etc. In general, the methods and systems described above may allow cars and other vehicles of the future to be more connected and integrated into a smart city environment, while protecting the anonymity and privacy of the users and/or drivers.

By scaling the methods and systems described above to a large base of recording vehicles, large data collection campaigns may be possible, which may even provide real time updates of the state of the environment in which vehicles may drive. The above-described methods and systems may serve as a test platform for testing newly developed algorithms and/or trained machine learning models on a plurality of vehicles 502 of vehicles. Due to the platform nature, a variety of business opportunities may be possible or applicable, e.g., by selling the collected data to third-party vendors.

In addition, while the collected data can contribute to a greener and safer road environment, it is further useful in, but not limited to, the following scenarios: The methods and systems disclosed herein may support city officers in monitoring and maintaining the condition of their road infrastructure as a key building block for smart cities. With sufficient device coverage and a sufficiently large user base, the methods and systems disclosed herein may allow for effective change detection in road conditions and other related features. The collected metadata 400 may be utilized to identify areas of interest for a data recording vehicle in order to maximize data value by recording time or for collecting data for specific driving scenarios, which may support the development of novel ADAS technologies.

Furthermore, debris 121 or detected accidents on the road may automatically be reported to the corresponding authorities by means of remote server 500. This may potentially save lives and may shorten the time for first responders to arrive at an accident location. The disclosed methods and systems may also allow for traffic flow estimation, which when aggregated, could improve path planning services, e.g., implemented in navigation systems. The optimization of recording drives as well as measuring differences in traffic flow could support the evaluation of road optimization projects.

Specifically, access to the plurality of vehicles 502 may be offered to customers and third-party vendors to collect specific metadata 400 as a service (platform as a product). The algorithms or algorithm modules operated in the recording devices (e.g., device 200 or in-vehicle unit 300, etc.) may then also be customer-defined. Opening the system in this way may also allow for the data collection by a research community and by potentially other stakeholders, like startups and OEM's (car manufacturers).

In addition, all vehicles of the plurality of vehicles 502 may be provided with one or more algorithms or algorithm modules specifically tailored to the current needs. Hence, all vehicles of the plurality of vehicles 502 could run different one or more algorithms or algorithm modules, which may increase flexibility of the disclosed system.

The methods according to the present invention may be implemented in terms of a computer program which may be executed on any suitable data processing device comprising means (e.g., a memory and one or more processors operatively coupled to the memory) being configured accordingly. The computer program may be stored as computer-executable instructions on a non-transitory computer-readable medium.

Embodiments of the present disclosure may be realized in any of various forms. For example, in some embodiments, the present invention (or parts of it) may be realized as a computer-implemented method, a computer-readable memory medium, or a computer system.

In some embodiments, a non-transitory computer-readable memory medium may be configured so that it stores program instructions and/or data, where the program instructions, if executed by a computer system, cause the computer system to perform a method, e.g., any of the method embodiments described herein, or, any combination of the method embodiments described herein, or, any subset of any of the method embodiments described herein, or, any combination of such subsets.

In some embodiments, a computing device may be configured to include a processor (or a set of processors) and a memory medium, where the memory medium stores program instructions, where the processor is configured to read and execute the program instructions from the memory medium, where the program instructions are executable to implement any of the various method embodiments described herein (or, any combination of the method embodiments described herein, or, any subset of any of the method embodiments described herein, or, any combination of such subsets). The device may be realized in any of various forms.

Although specific embodiments have been described above, these embodiments are not intended to limit the scope of the present disclosure, even where only a single embodiment is described with respect to a particular feature. Examples of features provided in the disclosure are intended to be illustrative rather than restrictive unless stated otherwise. The above description is intended to cover such alternatives, modifications, and equivalents as would be apparent to a person skilled in the art having the benefit of this disclosure.

The scope of the present disclosure includes any feature or combination of features disclosed herein (either explicitly or implicitly), or any generalization thereof, whether or not it mitigates any or all of the problems addressed herein. In particular, with reference to the appended claims, features from dependent claims may be combined with those of the independent claims and features from respective independent claims may be combined in any appropriate manner and not merely in the specific combinations enumerated in the appended claims.

## Claims

1. A computer-implemented method for gathering and distributing metadata of a surrounding of a vehicle during a ride, the method comprising:
at an apparatus arranged in the vehicle:
obtaining, from at least one sensor, sensor data representing at least extracts of the surrounding of the vehicle;
generating, from the sensor data, metadata using at least one algorithm module, the metadata comprising at least one feature describing a characteristic of the surrounding; and
transmitting the metadata to a remote server.

2. The computer-implemented method of claim 1, wherein the method further comprises:
receiving, from the remote server, the at least one algorithm module; and/or
configuring, the at least one algorithm module dependent on at least one characteristic of the vehicle.

3. The computer-implemented method any one of the preceding claims, wherein configuring comprises adapting one or more of the at least one algorithm module:
a detection threshold;
an interaction configuration of two or more submodules of the at least one algorithm module;
an update rate and/or a frequency of computation;
an output target of the at least one algorithm module.

4. The computer-implemented method of any of the preceding claims, wherein the step of generating meta data further comprises:
determining, whether the metadata include a personal identification mark; and
removing from the metadata the personal identification mark, if it has been determined that the metadata include a personal identification mark.

5. The computer-implemented method of any of the preceding claims, the method further comprising the step of:
determining the location of the vehicle and/or of the at least one feature describing a characteristic of the surrounding; and
transmitting the metadata if it has been determined that the location of the vehicle and/or of the at least one feature is outside of one or more predefined areas..

6. The computer-implemented method of any of the preceding claims, wherein the at least one sensor comprises one or more of:
a vision-based sensor;
a radar sensor; and/or
a Light Detection and Ranging, LiDAR, sensor.

7. The computer-implemented method of any of the preceding claims, the method further comprising at least one of:
receiving, from the remote server, guidance information indicating a preferred route for the vehicle; and
indicating the online status of the vehicle to the remoter server.

8. A computer-implemented method for gathering and distributing metadata of a surrounding of one or more vehicles, the method comprising:
at a remote server:
receiving, from the one or more vehicles, metadata generated using at least one algorithm module, wherein the metadata is derived from sensor data of one or more sensors of the one or more vehicles; and
storing the metadata in a storage means of the remote server.

9. The computer-implemented method according to claim 8, the method further comprising:
determining one or more operation state parameters associated with the one or more vehicles; and
configuring the at least one algorithm module according to the one or more operation state parameters.

10. The computer-implemented method according to claims 8-9, the method further comprising:
determining one or more algorithm transmission parameters;
selecting one or more algorithm modules available to the remote server; and
transmitting the selected one or more algorithm modules to the one or more vehicles.

11. An apparatus comprising means configured for performing the method of any of the claims 1-7.

12. A computer program comprising instructions, which when executed by a processing system, causing the processing system to perform the method of any of the claims 1-7 or 8-10.

13. A vehicle comprising means configured for performing the method of any of the claims 1-7.

14. A remoter server comprising means for performing the method of any of the claims 8-10.

15. A vehicle management system comprising one or more vehicles according to claim 13 and at least one remote server according to claim 14.
